# EUROPEAN PATENT APPLICATION

(11) **EP 1 102 471 A2**
(43) Date of publication of application: **23.05.2001**
(21) Application number: 00310141.7
(22) Date of filing: 15.11.2000
(51) Int. Cl.: H04N 1/23

(54) **Image reproducing apparatus and method**

(30) Priority: 18.11.1999 US 443228
(71) Applicant: Xerox Corporation, Rochester, New York 14644 (US)
(72) Inventor: Myers, Thomas Arthur, Rochester, New York 14620 (US)
(74) Representative: Skone James, Robert Edmund

(57) **Abstract**

A user interface element allows an operator of an image reproducing apparatus to adjust image quality settings on an individual stock basis. Where a print job contains multiple stocks, image quality settings for each of the stocks in the print job may be separately adjusted. An operator is, thus, able to enhance the overall quality of print job by selectively adjusting image quality settings on a per stock basis.

## Description

Conventional printers generally facilitate the adjustment of image quality settings. Image quality settings refer to the settings for parameters such as skew, color adjustment, and decurling, that affect the resulting quality of the printed output produced by the printer. Image quality settings that work well for one stock may not work well for another stock. For example, the image quality settings that work well for a white colored stock may not work well for a blue colored stock.

Unfortunately, the ability to adjust image quality settings with conventional printers is limited. In some conventional printers, an operator must manually adjust the image quality settings. The image quality settings are generally fixed for the system as a whole. When an operator wishes to change stocks, the operator must intervene and manually adjust the image quality settings to accommodate the new stock. In addition, there is no ability to adjust image quality settings for multiple stocks that are to be used in a common print job.

The present invention addresses the above-described problems of conventional printers by providing a mechanism wherein image quality settings may be established on a per stock basis. The image quality settings may be configured for multiple stocks in a single print job. Thus, the operator is given a greater deal of control to optimize the resulting printed output.

In one embodiment of the present invention, user interface elements are provided to allow the operator to manipulate the image quality settings. The operator may adjust image quality settings on a per stock basis via the user interface element. System default image quality settings may be provided and the operator may have the ability via user interface elements to adjust the settings within the system default settings.

In accordance with one aspect of the present invention, an image reproducing apparatus includes a user interface component for enabling a user to adjust image quality settings separately for each one of multiple stocks. The apparatus also includes an image quality controller for controlling image quality settings for the apparatus. The controller is responsive to a user interacting with the user interface component to adjust the image quality setting for at least one of the stocks.

In accordance with a further aspect of the present invention, a method is practiced in an image reproducing apparatus that is capable of printing with multiple stocks. A user-interface element is provided for enabling a user to adjust image quality settings on a per stock basis. The image quality settings for a selected stock are adjusted in response to the user interacting with the user-interfaced element. The image quality settings may include skew, decurling, color curve settings and the like.

An illustrative embodiment of the present invention will be described below relative to the following Figures.

FIGURE 1 is a block diagram of a printing system that is suitable for practicing the illustrative embodiment.

FIGURE 2 is a block diagram illustrating the printing component 42 of Figure 1 in more detail.

FIGURE 3 is a block diagram illustrating the print station 44 of Figure 1 in more detail.

FIGURE 4A depicts a user interface component for enabling an operator to adjust color curves on a per stock basis.

FIGURE 4B illustrates a portion of the user interface component 80 of Figure 4A in more detail.

FIGURE 5 depicts a user interface component for adjusting other image quality settings.

FIGURE 6 is a flow chart illustrating the steps that are performed to adjust image quality settings for a selected stock independent of the image quality settings for other stocks.

FIGURE 7 is a flow chart illustrating the steps that are performed to adjust image quality settings for a selected stock and automatically adjusting the relative image quality settings for other stocks.

FIGURE 8 is flow chart illustrating the steps that are performed to adjust image quality settings for multiple stocks in a single print job.

The illustrative embodiment of the present invention provides a mechanism that allows an operator of an image reproducing apparatus, such as a printer, to adjust image quality settings on a per stock basis. The illustrative embodiment also facilitates the selection of image quality settings on a per stock per print job basis. Hence, a single print job may have different image quality settings for the different stocks that are used within the print jobs. This is especially useful in instances wherein the image reproducing apparatus uses a large number of different stocks in printing a single print job.

The illustrative embodiment displays user interface elements with which the operator may interact and manipulate to adjust the image quality settings. The illustrative embodiment provides the ability for the operator to adjust skew, color curves, decurling parameters and other settings. Those skilled in the art will appreciate that the image quality settings that are discussed are intended to be merely illustrative and not limiting of the present invention.

In order to clarify the discussion below, it is helpful to first define a few terms.

A "stock" refers to a printing substrate on which an image reproducing apparatus may print content. The content may be affixed, fused, adhered or otherwise secured to the substrate.

An "image reproducing apparatus" refers to a device that is capable of reproducing images onto a stock and includes devices such as copiers, printers and the like.

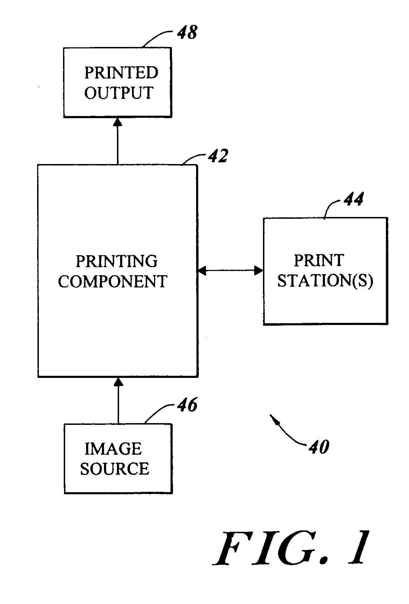

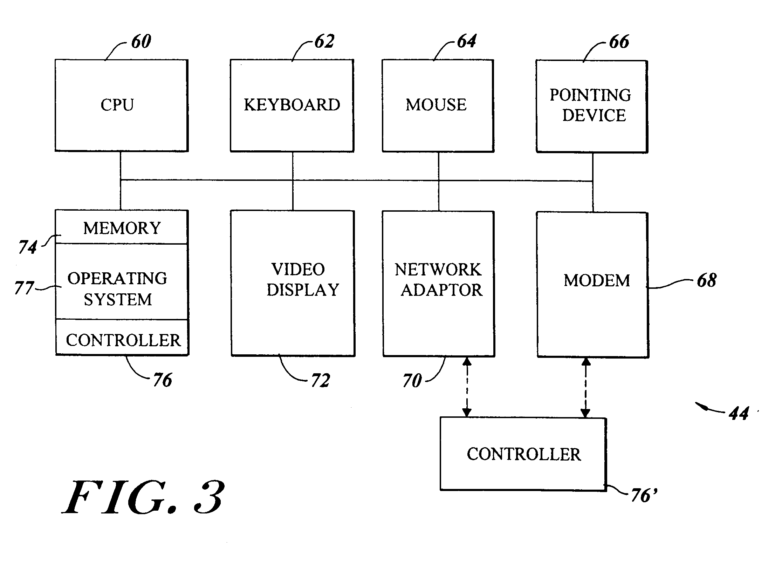

Figure 1 depicts an example of an image reproducing apparatus 40 that is suitable for practicing the illustrative embodiment of the present invention. Those skilled in the art will appreciate that the configuration shown in Figure 3 is intended to be merely illustrative and not limiting of the present invention. The image reproducing apparatus 40 includes a printing component 42 that is responsible for performing the actual printing on one or more stocks. It is presumed for purposes of the discussion below that printing tasks are organized into print jobs. The images to be printed originate from an image source 46. The image source 46 may be, for example, a scanner, a storage device or other imaging source. The printing component 42 produces printed output 48 on one or more stocks. One or more print stations 44 are provided to allow an operator to monitor and potentially control activity of the printing component 42.

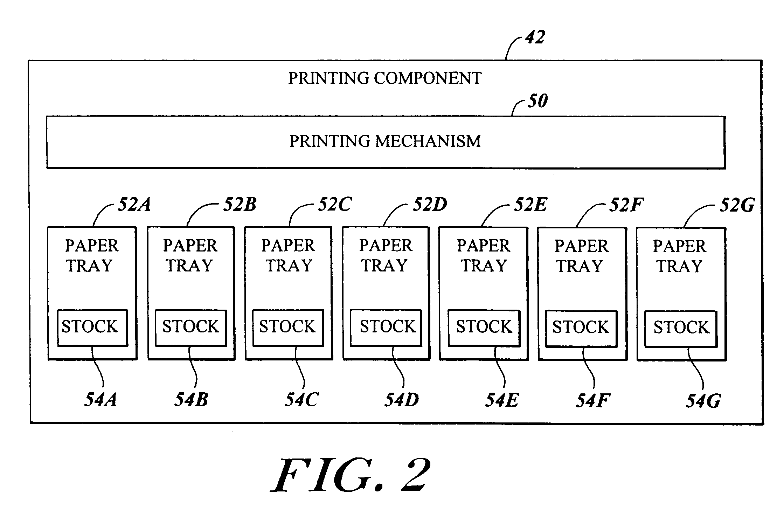

In the illustrative embodiment, it is presumed that the printing component 42 facilitates the use of multiple stocks and is capable of printing print jobs that includes multiple stocks. Figure 2 depicts an illustrative implementation of the printing component 42 in more detail. The printing component 42 includes multiple paper trays 52A, 52B, 52C, 52D, 52E, 52F and 52G. Each of the paper trays 52A-52G includes a respective stock 54A, 54B, 54C, 54D, 54E, 54F and 54G. These paper trays 52A-52G may serve as sources of the respective stocks 54A-54G that are fed into printing mechanism 50 to generate the printed output 48.

Figure 3 illustrates an implementation of a print station 44 in more detail. The print station 44 includes a central processing unit (CPU) 60 for executing instructions and overseeing operation of the print station. The CPU 60 may be, for example, any of a number of well-known conventional microprocessors. Those skilled in the art will appreciate that the print station may also include multiple processors. The print station 44 includes a keyboard 62 for enabling the operator to enter keyed input. In addition, the print station 44 includes a mouse 64 and may include one or more additional pointing devices 66. The print station 44 may include a modem 68 for communicating with remote computing resources. The modem 68 may be a conventional data modem for enabling communication over analog telephone lines, a cable modem for enabling communications over cable lines or a wireless modem for enabling communication over wireless channels. The print station 44 may include a network adapter 70 for interfacing the print station with a local area network (LAN). The print station may include a video display 72 for displaying video information.

The print station 44 includes memory 74 that may contain both primary memory and secondary memory. The memory 74 may include computer-readable media, such as but not limited to optical disks or magnetic disks. These media may be removable such that they may be removed from devices and transported to other locations. The memory 74 holds a copy of an operating system 77. A suitable operating system is the Solaris operating system sold by Sun Microsystems, Inc. of Palo Alto, California. The memory 74 may also hold a copy of a controller 76 that is responsible for controlling image quality settings and for displaying user interface elements to an operator for selecting image quality settings. The controller 76 may be resident in the local memory 74 or may be resident in remotely at a remote location and run in a client/server context (see 76' in Figure 3).

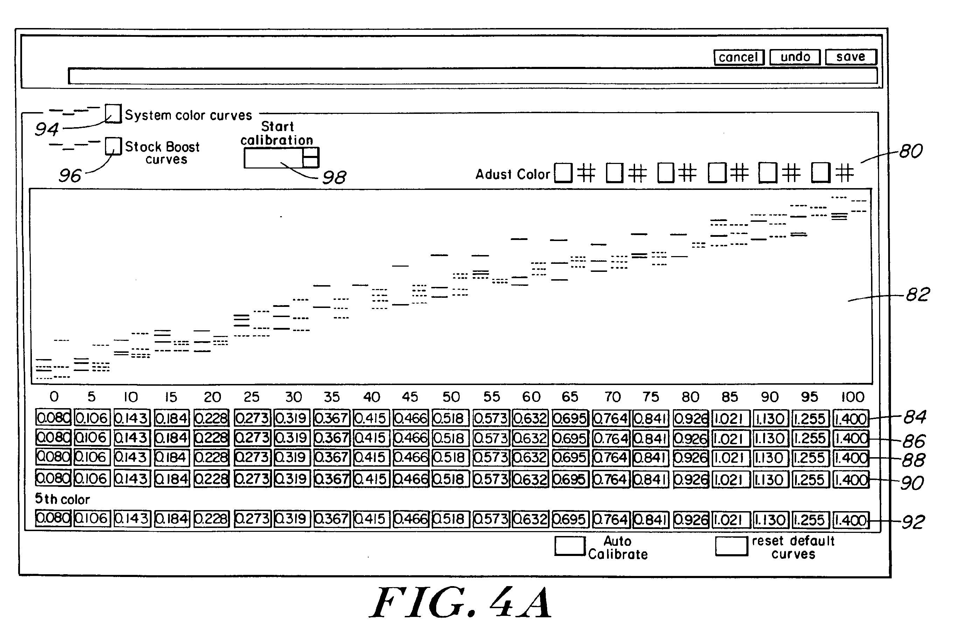

As was discussed above, the illustrative embodiment provides user interface components for allowing an operator to select image quality settings on a per stock basis and on a per job basis. Figure 4A shows an example of such a user interface component 80. This user interface component 80 allows an operator to adjust color curves. The color curves refer to the relative mappings of input colors in an input image to output colors. The user interface component 80 includes a graphical section 82 in which color curve settings are depicted. The curve is segmented into 21 groupings or segments ranging from 0 to 100. Each grouping has a label that is separated by 5 from neighboring groups. The left-hand column in each grouping has 5 bars that represent the relative settings for cyan, magenta, yellow, black and a fifth color. These colors are part of a subtractive color model that is used produce output on a color-printing device. The bars on the right-hand side of each grouping contain dots and represent the default system settings. Row 84 depicts the relative weightings of input to output for a cyan color component. Similarly, Row 86 depicts the weighting for magenta color components; Row 88 depicts the weightings for yellow color components; Row 90 depicts the weightings for black color components; and Row 92 depicts the weightings for a fifth color component. The operator has the ability to graphically manipulate the bars so as to adjust the weightings for the respective color components.

Figure 4A shows an example where the operator has selected button 94 to review system color curves. The system color curves are the default system settings. The default system color curves are shown along with the currently chosen system settings for image quality settings. Button 94 has a depressed appearance to illustrate the operator's selection. Button 96 associated with stock boost color curves has not been selected and the text box 98 is "grayed out" to illustrate it is not currently available.

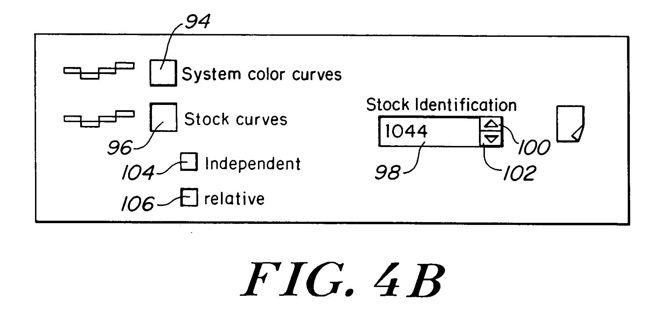

Figure 4B shows an example where the stock curves button 96 is depressed, and the system color curves button 94 is not depressed. Text box 98 is active 98 and no longer has a "grayed out" appearance. A stock identification number is displayed within the text box 98 to refer to the particular stock that is to have its color curve adjusted. An up arrow button 100 may be activated to increase the stock identification number depicted in the text box 98. Similarly, a down button arrow 102 may be activated to decrease the stock identification number. The operator also has the option of entering a stock identification via keyboard or other mechanism in the text box 98. The operator is presented with two additional buttons after depressing button 96. In particular, the operator is presented with the independent button 104 and the relative button 106. These buttons determine whether a color curve for a stock is to be adjusted independent of other stocks or whether the other stocks are to be adjusted to maintain relative ratios of settings. The independent button 104 may be chosen to independently set the color curve for a stock and the relative button 106 may be chosen to adjust the color curves of a stock and then automatically adjust the relative settings of color curves for other stocks.

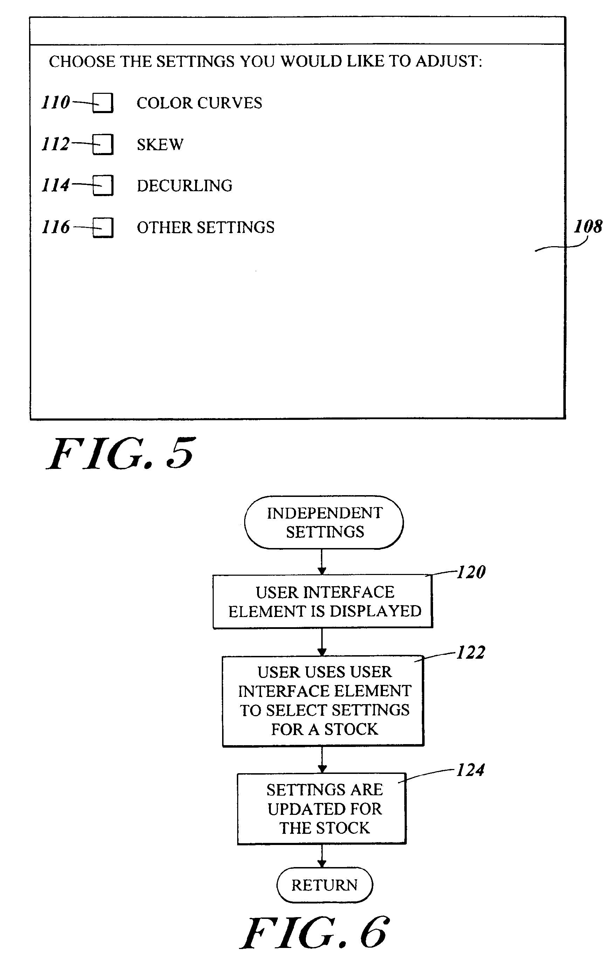

Figure 5 depicts an example of a user interface component (i.e., a window) 108 for allowing the operator to adjust other image quality settings. The window 108 depicts buttons 110, 112, 114 and 116. Button 110 may be selected to adjust color curves for stocks. Button 112 may be selected to adjust the skew for stocks. Skew refers to the relative squareness of how paper will feed through a machine and how the paper is to be lined up. Button 114 allows an operator to adjust decurling parameters. Different stocks may react differently to defusers and other processes and may require a greater or lesser amount of opposed pressure to avoid curling of the stock. Lastly, button 116 may be selected to adjust other image quality settings.

Those skilled in the art will appreciate that the depiction of the user interface components in Figures 4A, 4B and 5 is intended to be merely illustrative and not limiting of the present invention. Other user interface elements may be utilized. It is presumed that the operator may interact with user interface elements using a number of different input devices at the print station, including but not limited to the keyboard 62, the mouse 64 and the pointing device 66.

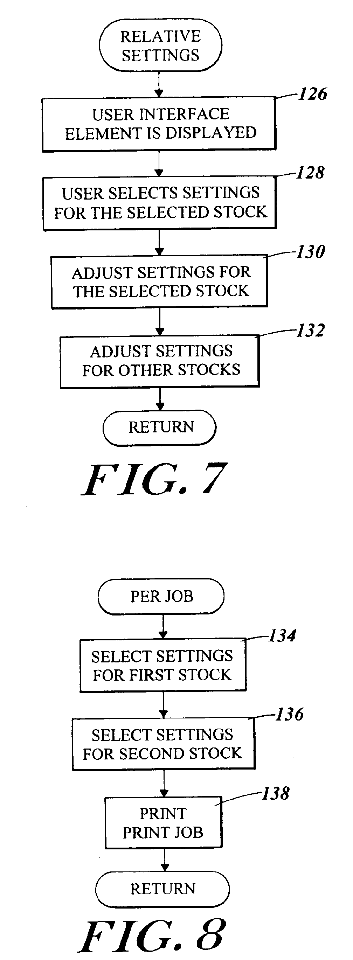

Figure 6 is a flow chart illustrating the steps that are performed to adjust image quality settings in a stock independent of image quality settings for other stocks. Initially, the user interface element is displayed (step 120 in Figure 6). The OSF Motif tool kit may be used to generate the widgets that are used in the user interface element. For example, the user interface depicted in Figure 4B may be displayed. The user then uses the user interface element to select appropriate settings for an individual stock (step 122 in Figure 6). The settings that have been selected by the user are then updated for the selected stock (step 124 in Figure 6). The controller 76 stores these settings in memory 74. These settings will be used in printing the associated stock unless the operator chooses different settings.

Figure 7 is a flow chart illustrating the steps that are performed to adjust the image quality settings for a stock relative to the image quality settings for other stocks. Specifically, other image quality settings for other stocks are automatically adjusted to compensate for the change in a selected stock. Initially, a user interface element is displayed (step 126 in Figure 7) and the operator uses the interface element to select settings for the selected stock (step 128 in Figure 7). The settings for the selected stock are then adjusted (step 130 in Figure 7). In addition, the settings of other stocks are also adjusted (step 132 in Figure 7). The controller 76 maintains information regarding the relative proportions of settings between different stocks in memory 74. Thus, for example, suppose that the ratio of a color curve component for one stock to another stock is 1.5 to 1. When the first color curve component is adjusted upward, the corresponding color curve component for the different stock is also adjusted upward to maintain the 1.5 ratio.

Figure 8 depicts the steps that are performed to adjust the image quality settings for multiple stocks in a single print job. User interface elements are displayed to allow the user to select image quality settings for the stocks that are to be used in a given print job. The operator then selects settings for a first stock (step 134), and then selects image quality settings for a second stock in the printer (step 136). This process may be repeated with additional stocks where more than two stocks are used in a given print job. The print job may then be printed using the image quality settings that have been selected for the different stocks so as to produce a print job that has enhanced overall quality.

## Claims

1. An image reproducing apparatus, comprising:
a user interface component for enabling a user to adjust image quality settings separately for each one of multiple stocks; and
an image quality controller for controlling image quality settings for the apparatus, wherein said image quality controller is responsive to a user interacting with the user interface component to adjust the image quality setting for at least one of the stocks.

2. The image reproducing apparatus of claim 1, wherein the apparatus further comprises a display and wherein the user interface component comprises a graphical element displayed on the display.

3. The image reproducing apparatus of claim 1 or claim 2, wherein the user interface component enables the user to adjust image quality settings separately for each one of the multiple stocks on a per print job basis.

4. The image reproducing apparatus of any of claims 1 to 3, wherein the apparatus includes system image quality settings that includes pre-established image quality settings for multiple stocks.

5. The image reproducing apparatus of any of claims 1 to 3, wherein the user interface component includes an element for
a) adjusting the system image quality settings, and/or
b) overriding the system image quality settings for a given stock, and/or
c) adjusting skew for a stock, and/or
d) adjusting color curves for stocks, and/or
e) adjusting settings for decurling stock.

6. The image reproducing apparatus of any of the preceding claims, wherein the apparatus further comprises multiple paper trays for holding multiple stocks.

7. A method for operating an image reproducing apparatus capable of printing with multiple stocks, the method comprising the steps of:
providing a user interface element for enabling a user to adjust image quality settings on a per stock basis; and
in response to a user interacting with the user interface element, adjusting image quality settings for a selected stock.

8. The method of claim 7, wherein the step of adjusting the image quality settings comprises one or more of adjusting skew for the selected stock, adjusting decurling settings for the selected stock, and adjusting color curve settings for the selected stock.

9. The method of claim 7 or claim 8, wherein the method further comprises the step of adjusting image quality settings for multiple stocks in response to a user interacting with the user interface element.
